# EUROPÄISCHE PATENTSCHRIFT

(11) **EP 3 475 771 B1**
(45) Veröffentlichungstag und Bekanntmachung des Hinweises auf die Patenterteilung: **19.10.2022**
(21) Anmeldenummer: 17751653.1
(22) Anmeldetag: 20.07.2017
(51) Int. Cl.: G05B 19/00, H02P 6/08

(54) **VORRICHTUNG ZUR POTENTIALGETRENNTEN LÜFTERANSTEUERUNG SOWIE LÜFTERSYSTEM UND ANSTEUERVERFAHREN**
DEVICE FOR ISOLATED FAN CONTROL AND FAN SYSTEM AND CONTROL METHOD
DISPOSITIF DE COMMANDE DE VENTILATEUR À SÉPARATION DE POTENTIEL AINSI QUE SYSTÈME DE VENTILATEURS ET PROCÉDÉ DE COMMANDE

(30) Priorität: 18.10.2016 DE 102016119826
(43) Veröffentlichungstag der Anmeldung: 01.05.2019
(73) Patentinhaber: Ebm-Papst St. Georgen GmbH & CO. KG, 78112 St. Georgen (DE)
(72) Erfinder: GÖHRING, Mark, 78136 Schonach (DE); SCHMID, Harald, 78576 Emmingen-Liptingen (DE)
(74) Vertreter: Staeger & Sperling Partnerschaftsgesellschaft mbB
(86) Internationale Anmeldenummer: PCT/EP2017/068400
(87) Internationale Veröffentlichungsnummer: WO 2018/072903

(56) Entgegenhaltungen:
- EP-A1- 2 809 019
- DE-A1- 10 244 665

## Beschreibung

Die vorliegende Erfindung betrifft eine Lüftermotorsteuervorrichtung zum Verbinden mit einer Ansteuerelektronik eines Lüftermotors nach dem Oberbegriff des Hauptanspruchs. Ferner betrifft die Erfindung ein Lüftersystem umfassend eine erfindungsgemäße Lüftermotorsteuervorrichtung sowie eine am Steuersignalausgang angeschlossene Lüftermotorelektronik, die eine Statorwicklung des Lüftermotors bestromen kann.

Aus dem gattungsbildenden Stand der Technik sind in Form von gängigen und marktüblichen Vorrichtungen Steuervorrichtungen für Lüftermotoren allgemein bekannt. Eine solche Steuervorrichtung nimmt in einer einfachsten und auf ein Minimum an Bauteilen reduzierten Ausführungsform ein Eingangssignal auf und gibt dieses als Ansteuersignal an eine Ansteuerelektronik weiter. Über das Ansteuersignal lässt sich der Lüftermotor ein- und ausschalten, auch erfolgt durch eine jeweils aktuell vorgegebene Steuerspannung im Rahmen eines Spannungsbereichs ein Steuern im Hinblick auf eine Drehzahlvorgabe, mit der der Luftvolumenstrom des Lüfters und damit die Kühlleistung des Lüfters beeinflusst werden.

Da Lüfter in einer Vielzahl von Anwendungen eingesetzt werden, sind Konfigurationen von Lüftersystemen entsprechend vielfältig. Gattungsbildende Lüftersysteme werden etwa zum Kühlen von Logikeinheiten, insbesondere von digitalen Signalprozessoren oder Mikrocontrollern, genutzt. Um herstellerunabhängig den Einsatz von verschiedenen Lüftern zu ermöglichen, existieren genormte Lüftergehäuse, umfassend eine üblicherweise auf einer gehäuseinternen Leiterplatte vorgesehene Ansteuerelektronik sowie einem diesem zugeordneten Lüftermotor.

Diese Systeme verfügen über einen Signaleingang, an dem beispielsweise wie erwähnt variable Gleichspannungen, alternativ ein pulsweitenmoduliertes Steuersignal (Eingangssignal), angeschlossen werden kann, worüber Drehzahl und damit die Kühlleistung des Lüfters steuerbar ist. So sind etwa für Logikeinheiten Lüftersysteme etabliert, die sich über eine Gleichspannung bis zu 12V, alternativ bis zu 5V, versorgen lassen. Dies erlaubt eine schnelle und einfache Integration eines solchen Lüfters in ein bestehendes System mit bereits vorhandenen Versorgungsspannungen. Alternativ kann eine Versorgungs- bzw. Ansteuerspannung auch durch einen geeigneten Gleichrichter bzw. eine Netzteilvorrichtung aus einer vorhandenen Netzspannung erzeugt werden.

Aus Sicherheitsgründen und im Hinblick auf eine möglichst universelle Einsetzbarkeit der Technologie ist es häufig erwünscht, eine galvanische Trennung in einem solchen System vorzusehen, um im Fehlerfall problematische Potentialunterschiede zu vermeiden. Dabei ist es als grundsätzlich bekannt zu unterstellen, eine derartige Potentialtrennung im Rahmen einer Netzteilelektronik vorzusehen, die dann bereits eine entsprechend getrennte Versorgungsspannung anbietet.

Allerdings erfordert eine derartige potentialgetrennte Lösung, dass die gesamte, mittels des Netzteils herangeführte elektrische Leistung - mit dem entsprechenden Bauteil- und Dimensionierungsaufwand - potentialgetrennt ist; bereits ein derartiger Trenn-Transformator ist angesichts des potentiell beschränkten Einbauraums voluminös sowie kostenträchtig.

Dabei stellen insgesamt die beschränkten Bauraumbedingungen, insbesondere bei den diskutierten, in den Abmessungen bzw im Bauraum genormten Lüftergehäusen geltenden Platzbedingungen, Grenzen dar, in welchen häufig individuelle, potentialgetrennte Lösungen nur mit hohem Aufwand untergebracht werden können. Zwar könnte dann innerhalb eines normierten Gehäuses ein entsprechend kleinerer Lüftermotor verbaut werden, dies wiederum senkt in nachteiliger Weise die nutzbare Kühlleistung ab. In jedem Fall würde eine potentialgetrennte Lösung, so diese nicht bereits von einem vorgelagerten Netzteil angeboten wird, zusätzliche Elektronikbaugruppen, etwa in Form von Hilfsplatinen, erfordern, was wiederum aus den diskutierten Gründen häufig durch die Einbaubedingungen unmöglich ist.

Aus der DE 102 44 665 A1 ist ferner eine Schaltungsanordnung zur galvanisch getrennten Signalübertragung bekannt. Darüber hinaus ist aus der EP 2 809 019 A1 ein EC- Motor bekannt, für dessen Motorelektronik zur galvanischen Trennung Optokoppler verwendet werden.

Ausgehend von dem diskutierten Stand der Technik liegt der Erfindung die Aufgabe zugrunde, eine Lüftermotorsteuervorrichtung nach dem Oberbegriff des Anspruchs 1 derart weiterzubilden, dass auf einfache, kostengünstige und kompakte Weise eine galvanische Trennung zwischen dem Steuersignaleingang und einem für den Lüftermotor vorzusehenden Steuersignalausgang vorgesehen werden kann, die insbesondere mit einem Lüftermotor in einem gemeinsamen Lüftergehäuse untergebracht sein kann und zur Verfügung stehendes Gehäusevolumen geringstmöglich einschränkt- Ferner ist ein System unter Nutzung einer derartigen Lüftermotorsteuervorrichtung zu schaffen und es ist ein System zum Betreiben einer Lüftermotorsteuervorrichtung zu bilden.

Die Aufgabe wird durch die Lüftermotorsteuervorrichtung nach dem Oberbegriff des Hauptanspruchs gelöst. Vorteilhafte Weiterbildungen der Erfindung sind in den Unteransprüchen beschrieben.

Ferner wird Schutz im Rahmen der Erfindung beansprucht, für ein System aufweisend eine derartige Lüftermotorsteuervorrichtung in Verbindung mit einer zur unmittelbaren Bestromung von Statorspulen eines Lüftermotors vorgesehenen Lüftermotorelektronik, weiter bevorzugt integriert in ein gemeinsames Lüftergehäuse. Auch wird Schutz im Rahmen der Erfindung beansprucht für ein Verfahren zur Ansteuerung einer derartigen Lüftermotorsteuervorrichtung.

Zur Vermeidung von Wiederholungen sollen system- bzw. vorrichtungsgemäß offenbarte Merkmale auch als verfahrensgemäß gelten und beansprucht sein und damit das erfindungsgemäße Verfahren, soweit sinnvoll, weiterbilden. Ebenso sollen im Rahmen der vorliegenden Anmeldung verfahrensgemäß offenbarte Merkmale auch als system- bzw. vorrichtungsgemäß offenbart und beansprucht gelten, insoweit das erfindungsgemäße System bzw. die erfindungsgemäße Vorrichtung auch zur Realisierung der offenbarten Verfahrensmerkmale, soweit technisch sinnvoll, vorgesehen ist.

In erfindungsgemäß vorteilhafter Weise überwindet die erfindungsgemäße Lüftermotorsteuervorrichtung die geschilderten Nachteile des Standes der Technik, nämlich zunächst dadurch, dass der Lüftermotorsteuervorrichtung Übertragungsmittel zugeordnet sind, die in Kombination mit eingangsseitig zugeordneten Modulationsmitteln und ausgangsseitig angeordneten Demodulationsmitteln für eine galvanische Trennung des am Steuersignaleingang angeschlossenen Steuersignaleingangssignals, insbesondere einer Drehzahlsteuerspannung, sorgen. Damit kann am Steuersignalausgang ein potentialentkoppeltes Steuersignalausgangssignal abgegriffen werden und einen angeschlossenen Lüftermotor antreiben. Über die Modulationsmittel wird das Steuersignaleingangssignal in ein digitales und/oder gepulstes Modulationseingangssignal gewandelt. Das am Steuersignaleingang angeschlossene analoge Eingangssignal kann entsprechend einer Steuervorgabe in einem vorbestimmten Wertebereich schwanken, wobei bei einem Maximal- und Minimalpegel des Steuersignals die Betriebsgrenzen des Lüfters, also beispielsweise die minimale und maximale Drehzahl des Lüfters, angesteuert werden. Diese Drehzahlvorgaben liegen dann in Form des von den Modulationsmitteln erzeugten digitalen bzw. gepulsten Modulationseingangssignals vor, wobei besonders bevorzugt und geeignet diese Modulation eine Pulsweitenmodulation des Eingangssignals vorsieht. Alternativ kann durch die Modulationsmittel aber auch ein digitales Signal in Form eines Bitstreams erzeugt werden, deren Wert zwischen logisch Null und logisch Eins derart schwankt, dass der Mittelwert über eine festgelegte Periode die am Steuersignaleingang angelegte Drehzahlsteuerspannung abbildet.

Das digitale bzw. gepulste Modulationseingangssignal wird nun über die Übertragungsmittel in ein digitales und/oder gepulstes Modulationsausgangssignal gewandelt. Dabei wird vom Signal eine galvanische Trennung überwunden, weshalb sich das Modulationsausgangssignal nun auf ein vom Eingang getrenntes und potentiell abweichendes Massenpotential bezieht. Somit liegt ein potentialentkoppeltes Modulationsausgangssignal vor, welches nun über nachgeschaltete Demodulationsmittel in ein, insbesondere analoges, Steuersignalausgangssignal gewandelt wird, das am Steuersignalausgang zur Ansteuerung des angeschlossenen Motors abgegriffen werden kann.

Mit anderen Worten, es erfolgt zunächst eine Digitalisierung des analogen Eingangssignals, insbesondere eines Gleichspannungssignals, in ein gepulstes und/oder digitales Eingangssignal, das in ein gepulstes und/oder digitales Ausgangssignal gewandelt wird und dabei eine galvanische Trennung überwindet wird, sodass ein vom Eingang galvanisch getrenntes Ausgangssignal entsteht. Anschließend erfolgt eine Rückwandlung (Demodulation) des digitalen Ausgangssignals in ein am Ausgang abgreifbares Ausgangssignal, das insbesondere (auch wieder) ein analoges Ausgangssignal ist. Alternativ ist aber auch eine Ausführungsform denkbar, bei der die Lüftermotorelektronik unmittelbar mit einem Digitalsignal beaufschlagt ist. Insoweit ist das erfindungsgemäße Steuersignalausgangssignal, bevorzugt ein analoges DC-Spannungssignal in einem vorgesehenen Spannungsband. Die Erfindung sieht jedoch auch einen digitalen Charakter dieses Steuersignalausgangssignals vor. Insoweit kommt es lediglich auf die Eignung des nachzuschaltenden Lüftermotors (bzw. dessen Lüftermotorelektronik) zur Verarbeitung dieses ausgangsseitigen Signals der Lüftermotorsteuervorrichtung an.

In einer besonders bevorzugten Ausführungsform der Erfindung ist der Steuersignaleingang so ausgebildet, dass an diesem eine veränderbare Steuerspannung, insbesondere eine Drehzahlsteuerspannung, mit einem Spannungsminimum und einem Bereich zwischen bevorzugt 3,3V bis 20V, besonders bevorzugt zwischen 5V bis 15V, ganz besonders bevorzugt zwischen 5V bis 10V, anlegbar ist. Dabei wird ein vorbestimmter Spannungsabstand zum 0V-Pegel eingehalten, was das Steuersignal weniger anfällig für Störungen, insbesondere in Form von ausgestrahlter EMV, macht.

Erfindungsgemäß ist vorgesehen, dass dem Steuersignaleingang Betriebsspannungsversorgungsmittel nachgeschaltet sind, die aus dem vorbestimmten, insbesondere zu jedem Betriebszeitpunkt eine positive Gleichspannungskomponente (Offset) aufweisenden Spannungspegel eine Versorgungsspannung für eingangsseitig den Übertragungsmitteln zugeordnete Elektronik bilden. So kann etwa ein Pufferkondensator vorgesehen sein, der mit seinen mittelnden bzw. glättenden Eigenschaften eine Versorgungsgleichspannung für die eingangsseitig vorzusehende Elektronik, etwa die nachstehend zu diskutierenden integrierten Verstärkungsschaltungen, anbietet.

Alternativ kann zu diesem Zweck auch ein DC/DC-Wandler vorgesehen sein, der, insbesondere ausgestaltet als Quer- oder Längsregler für eine konstante Versorgungsspannung dieser eingangsseitig vorzusehenden Elektronik sorgt und sich aus dem Eingangssignal, insbesondere aus dem zumindest der Mindestspannung entsprechenden DC-Anteil (Gleichspannungskomponente) speist. Dies ermöglicht erfindungsgemäß vorteilhaft einen kompakten Aufbau der Vorrichtung, da nur wenige Bauteile zur Erzeugung der eingangsseitig notwendigen Versorgungsspannung für dort vorzusehende Elektronik benötigt werden. Auch ist es vorteilhaft möglich, die erfindungsgemäße Lüftermotorsteuervorrichtung über einen gemeinsamen Anschluss, den Steuersignaleingang (Zweipol), anzusteuern und gleichermaßen zu versorgen.

In erfindungsgemäß vorteilhafter Weise sind auch Anschlüsse bzw. Kontakte des Steuersignalausgangs zweipolig ausgebildet und eignen sich somit in besonders geeigneter Weise zum Verbinden mit einer Ansteuerelektronik für einen Lüftermotor, mit sämtlichen damit realisierten Effizienz-, Kosten- und Bauraumvorteilen. Durch diese Maßnahme können zudem auch vorteilhafte Ableitungen für das Ausgangssignal auf ein Minimum reduziert werden, mit dem damit verbundenen vorteilhaft niedrigen Verdrahtungs- und Kontaktierungsaufwand.

Dabei ist es im Rahmen bevorzugter Weiterbildungen, gerade auch im Hinblick auf die vorteilhafte Ausbildung des Lüftermotors, vorgesehen, dass dieser als, bevorzugt einphasiger oder dreiphasiger, insbesondere als bürstenloser Gleichstrommotor ausgebildet ist, mit damit verbundenen vorteilhaft geringen Verschleiß, was besonders vorteilhaft im Hinblick auf einen dadurch reduzierten Wartungsaufwand ist. Gleichzeitig ermöglicht die vorteilhafte Ausführungsform des Lüftermotors als bürstenloser Gleichstrommotor einen besonders hohen Motorwirkungsgrad über einen großen Leistungsbereich.

Wiederum unter Kostengesichtspunkten ist es weiterbildungsgemäß bevorzugt und vorteilhaft, die Modulationsmittel ohne programmierbare oder programmierte Logikmittel (etwa übliche Mikroprozessoren oder Mikrocontroller mit zugeordneter Peripherie) zu realisieren. Vielmehr ist es gemäß dieser Weiterbildung vorgesehen, die Modulationsmittel mit einem zur Digitalisierung der Drehzahlsteuerspannung beschalteten Regel- bzw. Operationsverstärker auszubilden, was sowohl im Hinblick auf den Bauteileaufwand kostengünstig ist, als auch hohe Zuverlässigkeit mit kompakten Bauraumerfordernissen vorteilhaft kombiniert. Insbesondere die Verwendung standardisierter Komponenten, etwa integrierter Bausteine mit Standard-Operationsverstärkern, verspricht eine hohe Zuverlässigkeit auch unter anspruchsvollen Betriebsbedingungen der damit zu realisierenden Gesamtvorrichtung.

In der weiteren Konkretisierung dieses Ausführungsbeispiels ist vorgesehen, dass die Modulationsmittel einen auf der Basis eines solchen Regel- bzw. Operationsverstärkers aufgebauten Schmitt-Trigger ausbilden, dessen Eingänge so beschaltet sind, dass sie das analoge Steuersignaleingangssignal mit einem periodischen und insbesondere sägezahnförmigen internen Hilfssignal vergleichen. Dabei ist es besonders bevorzugt, wenn das interne Hilfssignal vorteilhaft durch den Einsatz mindestens eines weiteren Operationsverstärkers erzeugt wird, was den Vorteil bringt, dass ein integrierter Schaltkreis mit mehreren in einem gemeinsamen Gehäuse vorgesehenen Operationsverstärker kompakt und kostengünstig eingesetzt werden kann. Eine typische Schwingungsfrequenz des internen, sägezahnförmigen Hilfsspannungssignals liegt in der Größenordnung von 500Hz (Grundschwingung) und bildet insoweit die Grundfrequenz des Mittels des Schmitt-Triggers erzeugten pulsweitmodulierten Signals.

Eine weiter bevorzugte Ausführungsform der Erfindung sieht vor, dass die potentialtrennenden Übertragungsmittel als Optokoppler und/oder mittels eines induktiven Potentialentkopplers realisiert sind. Auch hier liegen kostengünstige Standard-Bauelemente, etwa auf der Basis von Silizium-Halbleiter-ICs vor. Eine weitere Alternative ist ein kapazitiver Entkoppler.

So erzeugt in ansonsten bekannter Weise ein Optokoppler eine galvanische Trennung durch Umsetzung des Steuersignals in ein Lichtsignal, was im Rahmen des Optokopplers danach durch eine Photodiode oder dergleichen Detektorelement wieder in ein Spannungssignal gewandelt werden kann, wobei der Optokoppler primärseitig und sekundärseitig unterschiedliche Bezugspotentiale ermöglicht. Entsprechendes gilt für den Einsatz eines induktiven Potentialentkopplers für die erfindungsgemäße galvanische Trennung, wobei dort das Eingangssignal induktiv in ein Ausgangssignal übertragen wird, was, bezogen auf Signale höherer zu übertragender Leistung, einen höheren Wirkungsgrad, verbunden auch mit höheren Grenzfrequenzen, ermöglicht Allerdings dürfte diese Variante, nicht zuletzt aufgrund des höheren Bauteileaufwandes und anhand der vorstehend genannten relativ niedrigen Modulationsfrequenz weniger bevorzugt, gleichwohl nicht ausgeschlossen, sein.

Im Hinblick auf die Sekundärseite der potentialgetrennten Übertragungsmittel sieht eine bevorzugte Ausführungsform der Erfindung vor, für die Demodulation eine analoge Tiefpassschaltung vorzusehen. Wiederum ist es hier, analog zum Vorgehen auf der Übertrager-Primärseite, vorteilhaft, mit einem diskreten Bauelementenetzwerk und unter Vermeidung integrierter bzw. digitaler Baugruppen vorzugehen. So kann bereits eine einfachste Demodulation des vom Übertrager übermitteln Signals durch einen aus Widerstand und Kondensator realisierten Tiefpass erfolgen, dessen Ausgangssignal ausreicht, um ausgangsseitig der erfindungsgemäßen Vorrichtung den nachgeschalteten Partner anzusteuern. Auch ermöglicht ein derartiges Netzwerk, weiter bevorzugt auf einer (gemeinsamen) Leiterplatte integriert, die angestrebten Kompaktheits- und Bauraumvorteile im Rahmen beschränkter Bauraumverhältnisse in einem Lüftermodul zu realisieren.

Gemäß einer besonders bevorzugten Ausführungsform der Erfindung, sind die Übertragungsmittel zweikanalig so realisiert, dass ein zweiter Kanal, insbesondere unter Nutzung eines weiteren (zweiten) Optokopplers (welcher üblicherweise und bevorzugt Bestandteil des gemeinsamen Optokopplergehäuses ist) beschaltet ist, mit einem lüftermotorspezifischen Signal des angeschlossenen Lüftermotors und/oder der Ansteuerelektronik, das somit zur Primärseite bzw. zum Eingang (Steuersignaleingang) zurückgeführt wird. Hier lässt sich dann einfach dieses rückgekoppelte Signal mit einem zusätzlichen eingangsseitigen Signalanschluss abgreifen und geeignet zur Überwachung bzw. für andere Zwecke verwerten. So ist es etwa erfindungsgemäß weiterbildend bevorzugt, einen solchen zweiten Kanal zu benutzen, um eine Messgröße der (im Rahmen des erfindungsgemäßen Systems abgeschalteten) Lüftermotorelektronik zurückzuführen, wobei dies z.B. ein Drehzahlsignal sein kann, welches dann eingangsseitig in Form eines Tachosignals vorliegt und unmittelbar auf einem tatsächlich ausgangsseitig vorhanden Signal beruht. Durch den Optokoppler wird auch hier die galvanische Trennung sichergestellt. Nicht zuletzt ist die Nutzung von zwei Optokopplern als Übertragungsmittel vorteilhaft, da standardisierte Bauteile mit zwei in einem Gehäuse vorgesehenen Optokopplern häufig verbreitet und entsprechend kostengünstig sind.

Im Rahmen der vorliegenden Erfindung wird ferner Schutz für ein System (Lüftersystem) beansprucht, bei welchem eine erfindungsgemäße Lüftermotorsteuervorrichtung mit einer Lüftermotorelektronik zusammengeführt ist, weiche dann unmittelbar Statorwicklungen des Lüftermotors bestromen kann. Weiter bevorzugt ist vorgesehen, dass diese Vorrichtungen auf eine gemeinsame Platine oder dergleichen Trägervorrichtung vorgesehen sind und weiter bevorzugt in einem gemeinsamen, etwa modularen und zusätzlich den Lüftermotor aufnehmenden Gehäuse untergebracht sind. Die vorliegende Erfindung mit den vorstehend diskutierten Vorteilen in der Kompaktheit und Einfachheit der Hardware-Realisierung gestattet es in besonders eleganter Weise, den in gängigen Lüftermodulgehäusen vorhandenen Bauraum (eine typische Kantenlänge derartiger monierter Gehäuse beträgt 120mm) unterzubringen, ohne dass etwa ein kleinerer Lüftermotor verwendet werden muss. Typische maximale elektrische Leistungen (Leistungsaufnahmen) derartiger Module liegen bei 15W, weiter bevorzugt bei 10W und noch weiter bevorzugt bei 5W.

Im Rahmen der Erfindung wird ferner Schutz für ein Verfahren zum Betreiben einer Lüftermotorsteuervorrichtung, insbesondere einer erfindungsgemäßen Lüftermotorsteuervorrichtung, beansprucht, welches im Wesentlichen die im Zusammenhang mit der erfindungsgemäßen Vorrichtung diskutierten Vorteile realisiert. Auch hier besteht eine vorteilhafte Weiterbildung in dem Erzeugen einer Betriebsspannung für primärseitig vorzusehende Steuerelektronik, welche weiter bevorzugt wiederum ohne Prozessor- bzw. Controllereinheiten realisiert ist, aus dem Spannungsoffset (d.h. der Gleichspannungskomponente) des eingangsseitig anzulegenden Steuerspannungssignals.

Im Ergebnis erreicht die vorliegende Erfindung in überraschend einfacher, kompakter und kostengünstig zu realisierenden Weise eine wirksame Potentialtrennung zur Vorschaltung bzw. zum Betreiben eines Lüftermotors, wobei eine derartige Funktionalität insbesondere kompakt und in existierende modulare Gehäusestrukturen integrierbar ist, ohne dass, selbst bei beengten Platzverhältnissen, zusätzliche externe Lösungen geschaffen werden müssen. Damit eignet sich die vorliegende Erfindung in herausragender Weise für den Betrieb von Lüftermotoren, wobei hier insbesondere die Anwendung im Zusammenhang mit Logikeinheiten besonders bevorzugt ist, nicht jedoch das Anwendungsspektrum der vorliegenden Erfindung beschränkt. Prinzipiell eignet sich die vorliegende Erfindung auch zur Potentialtrennung von (Gleichspannungs-)Verbrauchern außerhalb der Lüftermotortechnologie.

Weitere Vorteile, Merkmale und Einzelheiten der Erfindung ergeben sich aus der nachfolgenden Beschreibung bevorzugter Ausführungsbeispiele sowie anhand der Zeichnungen,
diese zeigen in
- Fig. 1: ein Blockdiagramm einer ersten Ausführungsform der erfindungsgemäßen Lüftermotorsteuervorrichtung mit nachgeschalteter Lüftermotorelektronik eines Lüftermotors und
- Fig. 2: eine Ausführungsform der Modulationsmittel, die durch die Verschaltung von Elektronikbauteilen umfassend einen Operationsverstärker ausgeführt sind.

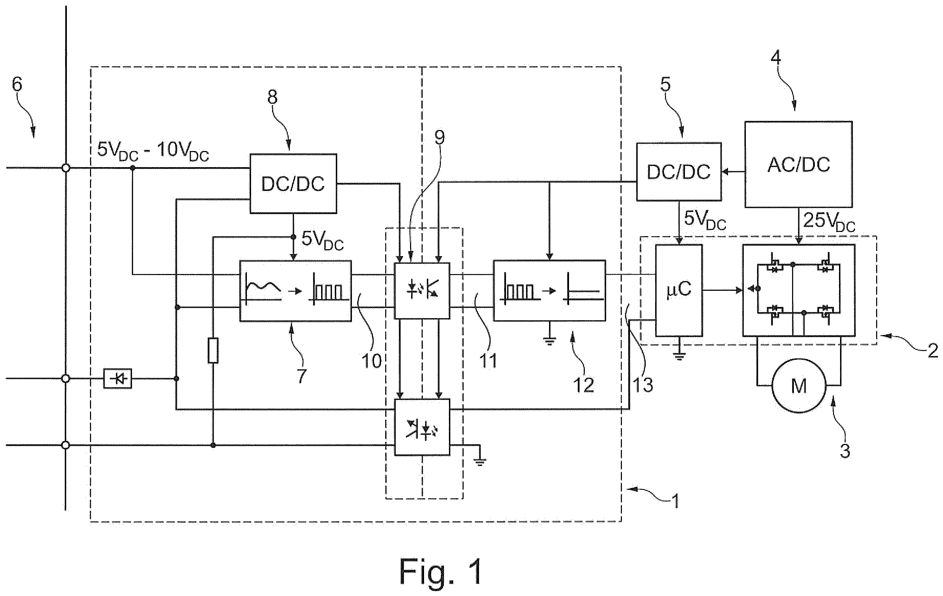

In Fig. 1 ist ein schematisches Blockdiagramm einer ersten Ausführungsform der erfindungsgemäßen Lüftermotorsteuervorrichtung 1 gezeigt, in der erfindungsgemäße Übertragungsmittel 9 angeordnet sind, die die Lüftermotorsteuervorrichtung 1 in eingangsseitig und ausgangsseitig angeordnete Elektronik unterteilen. Auf der Eingangsseite wird die Lüftermotorsteuervorrichtung 1 über den Steuersignaleingang 6 mit einer Drehzahlsteuerspannung beaufschlagt, die ausgangsseitig am, insbesondere zweipoligen Steuersignalausgang 13 zum Verbinden mit einer Lüftermotorelektronik 2, über die Statorwicklungen eines Lüftermotors 3 bestromt werden, wieder herausgeführt ist.

Die Übertragungsmittel 9 erzeugen aus einem zugeführten digitalen (d.h. über nachfolgend beschriebene Mittel 7 digitalisiertes Signal) und/oder gepulsten Modulationseingangssignal 10 ein galvanisch getrenntes digitales und/oder gepulstes Modulationsausgangssignal 11. In der dargestellten Ausführungsform gelingt dies durch einen Optokoppler, der das Modulationseingangssignal 10 durch Lichtpulse in das über Detektormittel wieder erfasste Modulationsausgangssignal 11 wandelt. Des Weiteren ist den Übertragungsmitteln 9 ein zweiter Kanal zugeordnet, der eine auf die Eingangsseite bezogene Ausgabe eines Messsignals, insbesondere eines Tachosignals, der Lüftermotorelektronik 1 ermöglicht.

Der Eingangsseite sind Betriebsspannungsversorgungsmittel 8 zugeordnet, die die eingangsseitig angeordnete Elektronik mit Energie versorgen. Dabei ist es besonders vorteilhaft, dass sich die Betriebsspannungsversorgungsmittel 8 aus einer in der Drehzahlsteuerspannung enthaltenen Gleichspannungskomponente versorgen und daraus die Versorgungsspannung, insbesondere eine Gleichspannungsversorgungsspannung, bilden, womit sich nicht nur vorteilhaft die Anzahl der eingangsseitig angeordneten Kontakte reduzieren lässt, sondern auch neben geringeren Herstellungskosten der Verdrahtungsaufwand bei der Montage der Lüftermotorsteuervorrichtung reduzieren lässt.

Die eingangsseitige Elektronik wird von den Modulationsmitteln 7 sowie anteilig von den Übertragungsmitteln 9 gebildet und damit durch die Betriebsspannungsversorgungsmittel 8 versorgt.

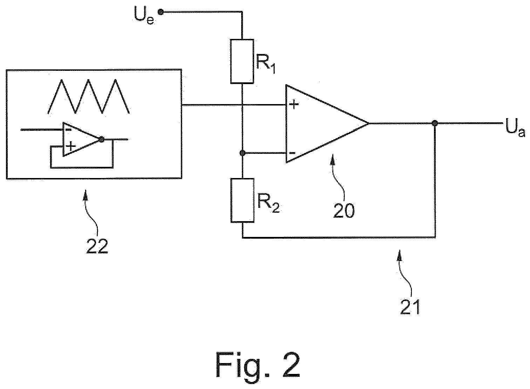

Das Modulationsmittel 7 erzeugt aus der eingangsseitig angelegten Drehzahlsteuerspannung das gepulste bzw. digitale Modulationseingangssignal 10. Eine bevorzugte Ausführungsform der Modulationsmittel 7 wird später in Zusammenhang mit Fig. 2 genauer beschrieben.

Die ausgangsseitige Elektronik werden von den Demodulationsmitteln 12 sowie anteilig von den Übertragungsmitteln 9 gebildet und über ein Netzteil 4 energetisch mit einer Versorgungsspannung versorgt.

Durch die Demodulationsmittel 12 erfolgt eine Wandlung des digitalen bzw. gepulsten Modulationsausgangssignals 11 in ein am Ausgang der Lüftermotorsteuervorrichtung 1 abgreifbares Steuersignalausgangssignal zum Verbinden mit einer Lüftermotorelektronik 2. In einer bevorzugten Ausführungsform sind die Demodulationsmittel 12 in Form einer Tiefpassschaltung ausgeführt, die besonders bevorzugt durch die vorteilhafte Verschaltung von diskreten Bauteilen, ganz besonders bevorzugt in Form eines Widerstands- und Kondensatornetzwerks, ausgebildet sind.

Die Drehzahlsteuerspannung wird einer Lüftermotorelektronik 2 zugeführt, die aus Leistungselektronik umfassenden Elektronikbauteilkomponenten besteht und die Statorwicklungen eines, bevorzugt einphasigen oder dreiphasigen, weiter bevorzugt als bürstenloser Gleichstrommotor ausgebildeten Lüftermotors 3 bestromt. Mit Energie wird die Lüftermotorelektronik 2 über das mit einem nicht dargestellten Wechselstromnetz verbundenen Netzteil 4 versorgt, das in ansonsten bekannter Art und Weise aus der Netzspannung eine Gleichspannung erzeugt. Die Gleichspannung wird durch einen weiteren Gleichspannungswandler 5 in eine weitere, insbesondere betragsmäßig abweichende Gleichspannung gewandelt, die, neben Logikeinheiten und Bauteilkomponenten der Lüftermotorelektronik 2, auch die ausgangsseitig angeordneten Elektronik der Lüftermotorsteuervorrichtung 1 versorgt.

Besonders bevorzugt ist eine Ausführungsform, bei der die erfindungsgemäße Lüftermotorsteuervorrichtung 1 sowie die Lüftermotorelektronik 2 auf einer Platine angeordnet sind. Weiter bevorzugt ist, dass die Platine in einem Gehäuse mit den Kantenlängen zwischen 115 und 125mm angeordnet ist, dem auch der Lüftermotor 3 zugeordnet ist, die miteinander ein Modul bilden. Diese Normierung bzw. Standardisierung (das Leiterplattenmaß ist exemplarisch) gewährleistet ein breites Einsatzgebiet der erfindungsgemäßen Vorrichtung sowie des Systems, da es etablierte und weit verbreitete Systeme mit identischer Modulgröße ersetzen kann.

Es sind auch Varianten der erfindungsgemäßen Lüftermotorsteuervorrichtung möglich, bei denen die Demodulationsmittel 12 ein digitales Steuersignalausgangssignal ausgeben, das in der Lüftermotorelektronik 2 zur Ansteuerung des Lüftermotors 3 weiter verarbeitet wird.

In Fig. 2 ist eine Ausführungsform der Modulationsmittel 7 gezeigt, bei denen Operationsverstärker 20 umfassende Elektronikbauteilkomponenten einen in einer ansonsten bekannten Art eines Schmitt-Triggers verschaltet sind. Die Schaltung vergleicht die am Steuersignaleingang 6 angelegte Drehzahlsteuerspannung mit einem internen Hilfssignal.

Bei dem Hilfssignal handelt es sich um ein sägezahnförmiges Spannungssignal mit einer Grundfrequenz von hier exemplarisch 500Hz, das hier exemplarisch über eine Anordnung an Elektronikbauteilkomponenten aufweisend einen weiteren Operationsverstärker, erzeugt wird. Vorliegend ist die Anordnung beispielhaft und bevorzugt als Sägezahngenerator 22 mit integriertem Operationsverstärker ausgebildet. Bei einer besonders bevorzugten Ausführungsform sind die beiden Operationsverstärker zur Generierung des Hilfssignals und zur Ausbildung des Schmitt-Triggers in einem gemeinsamen Bauteilgehäuse ausgeführt, was vorteilhaft das kompakte Design der Lüftermotorsteuervorrichtung 1 unterstützt und kostengünstige Bauteilbeschaffung ermöglicht. Der Schmitt-Trigger bildet das Modulationsausgangssignal, indem er bei betragsmäßiger Übereinstimmung der eingangsseitig angeschlossenen Spannungssignale einen sich zwischen logisch Eins und logisch Null ändernden Pegel am Ausgang ausgibt, was zu der Digitalisierung des am Eingang angeschlossenen Analogsignals führt.

### Bezugszeichenliste

1. Lüftermotorsteuervorrichtung
2. Lüftermotorelektronik
3. Lüftermotor
4. Netzteil
5. Gleichspannungswandler
6. Steuersignaleingang
7. Modulationsmittel
8. Betriebspannungsversorgungsmittel
9. Übertragungsmittel
10. digitales und/oder gepulstes Modulationseingangssignal
11. digitales und/oder gepulstes Modulationsausgangssignal
12. Demodulationsmittel
13. Steuersignalausgang
20. Operationsverstärker
21. Schmitt-Trigger
22. Sägezahngenerator

## Patentansprüche

1. Lüftermotorsteuervorrichtung (1) umfassend einen Steuersignaleingang (6) zum Anlegen einer Drehzahlsteuerspannung als Steuersignaleingangssignal und einen Steuersignalausgang (13) zum Abgreifen eines Steuersignalausgangssignal zum Verbinden mit einem Lüftermotor (3), **dadurch gekennzeichnet, dass** dem Steuersignaleingang (6) Modulationsmittel (7) nachgeschaltet sind, die zum Umsetzen des Steuersignaleingangssignals in ein digitales und/oder gepulstes Modulationseingangssignal (10) ausgebildet sind, und denen potentialtrennende Übertragungsmittel (9) nachgeschaltet sind, die das digitale bzw. gepulste Modulationseingangssignal (10) in ein vom Steuersignaleingang potentialentkoppeltes digitales und/oder gepulstes Modulationsausgangssignal (11) übertragen, das über den Übertragungsmitteln (9) nachgeschalteten Demodulationsmitteln (12) in das am Steuersignalausgang abgreifbare Steuersignalausgangssignal gewandelt wird, wobei
dem Steuersignaleingang Betriebsspannungsversorgungsmittel (8) nachgeschaltet sind, die aus einer vorbestimmten Gleichspannungskomponente des angeschlossenen Steuersignaleingangssignals eine Versorgungsspannung für eingangseitig den Übertragungsmitteln (9) vorgesehene Elektronik bilden.

2. Vorrichtung nach Anspruch 1, **dadurch gekennzeichnet, dass** der Steuersignaleingang (6) so ausgebildet ist, dass an diesem die veränderbare Drehzahlsteuerspannung mit einem Spannungsminimum anlegbar ist, der einen vorbestimmten Spannungsabstand zum 0V-Pegel einhält, wobei ein Bereich der Drehzahlsteuerspannung zwischen bevorzugt 3,3V bis 20V, besonders bevorzugt zwischen 5V bis 15V, ganz besonders bevorzugt zwischen 5V bis 10V anlegbar ist.

3. Vorrichtung nach einem der vorhergehenden Ansprüche, **dadurch gekennzeichnet, dass** der Steuersignalausgang (13) zum Verbinden mit dem Lüftermotor (3) zweipolig ausgebildet ist.

4. Vorrichtung nach einem der vorhergehenden Ansprüche, **dadurch gekennzeichnet, dass** der Lüftermotor (3) als, bevorzugt einphasiger oder dreiphasiger, vorzugsweise bürstenloser Gleichstrommotor ausgebildet ist.

5. Vorrichtung nach einem der vorhergehenden Ansprüche, **dadurch gekennzeichnet, dass** die Modulationsmittel (7) ohne programmierbare oder programmierte Logikmittel realisiert sind und mit einem zur Digitalisierung der Drehzahlsteuerspannung beschalteten Regel- und/oder Operationsverstärker (20) ausgebildet sind.

6. Vorrichtung nach Anspruch 5, **dadurch gekennzeichnet, dass** die Modulationsmittel (7) einen auf Basis eines Operationsverstärkers (20) aufgebauten Schmitt-Trigger (21) aufweisen, der ein periodisches und insbesondere sägezahnförmiges internes Hilfssignal mit dem analogen Steuersignaleingangssignal vergleicht, wobei das interne Hilfssignal bevorzugt mittels eines weiteren Operationsverstärkers (20) erzeugt wird.

7. Vorrichtung nach einem der vorhergehenden Ansprüche, **dadurch gekennzeichnet, dass** die potentialtrennenden Übertragungsmittel (9) einen Optokoppler und/oder einen induktiven Potentialentkoppler, insbesondere umgesetzt durch einen bevorzugt standardisierte integrierten Schaltkreis, und/oder einen kapazitiven Entkoppler aufweisen.

8. Vorrichtung nach einem der vorhergehenden Ansprüche, **dadurch gekennzeichnet, dass** die Demodulationsmittel (12) eine analoge Tiefpassschaltung, bevorzugt aufgebaut aus diskreten Bauelementen, insbesondere durch Verschalten eines Widerstandes mit einem Kondensator, aufweisen.

9. Vorrichtung nach einem der vorhergehenden Ansprüche, **dadurch gekennzeichnet, dass** die Übertragungsmittel (9) zweikanalig so realisiert sind, dass ein zweiter Kanal, insbesondere unter Nutzung eines zweiten Optokopplers eines gemeinsamen Optokopplergehäuses der Übertragungsmittel (9), zur potentialgetrennten Rückführung eines lüftermotorspezifischen Signals des angeschlossenen Lüftermotors (3) angeordnet ist, bevorzugt zum Abgreifen an einem zusätzlichen eingangsseitigen Signalanschluss.

10. Lüftersystem aufweisend eine Lüftermotorsteuervorrichtung (1) nach einem der vorhergehenden Ansprüche sowie eine über den Steuersignalausgang angesteuerte Lüftermotorelektronik (2), die Statorwicklungen eines Lüftermotors antreibt.

11. Lüftersystem nach Anspruch 10 **dadurch gekennzeichnet, dass** die Lüftermotorsteuervorrichtung (1) und die Lüftermotorelektronik (2) auf einer Platine angeordnet sind und/oder in einem gemeinsamen Lüftergehäuse angeordnet sind.

12. Lüftersystem nach Anspruch 10 oder 11 **dadurch gekennzeichnet, dass** ein Kantenmaß des Lüftergehäuses im Bereich zwischen 110mm bis 130mm, insbesondere zwischen 115mm und 125mm liegt und/oder dass eine maximale Leistungsaufnahme der Lüftermotorelektronik (2) 15W, weiter bevorzugt 10W und noch weiter bevorzugt 5W umfasst.

13. Verfahren zum Betreiben der Lüftermotorsteuervorrichtung (1) nach Anspruch 1 bis 8 umfassend folgende Schritte:
- Anlegen einer Gleichspannungskomponente aufweisenden, variablen Drehzahlsteuerspannung am Steuersignaleingang
- Erzeugen eines eingangsseitigen gepulsten und/oder digitalen Modulationseingangssignal (10) über vorgesehene Modulationsmittel (7) aus der Drehzahlsteuerspannung
- Übertragen des Modulationseingangssignals (10) in ein vom Steuersignaleingang potentialentkoppeltes digitales und/oder gepulstes Modulationsausgangssignal (11) durch potentialtrennende Übertragungsmittel (9)
- Wandeln des digitalen bzw. gepulsten Modulationsausgangssignals (11) über vorgesehene Demodulationsmittel (12) in ein am Steuersignalausgang abgreifbares Steuersignalausgangsignal für den Lüftermotor (3)

14. Verfahren nach Anspruch 13 **dadurch gekennzeichnet dass**, das Steuersignalausgangssignal an eine Lüftermotorelektronik (2) angelegt wird, die Statorwicklungen des, bevorzugt als einphasiger oder dreiphasiger, insbesondere bürstenloser Gleichstrommotor ausgebildeten Lüftermotors (3) bestromt.

## Claims

1. A fan motor control device (1), comprising a control signal input (6) for applying a rotational speed control voltage as the control signal input signal and a control signal output (13) for tapping a control signal output signal for connection to a fan motor (3),
**characterized in that**
connected downstream from the control signal input (6) are modulation means (7), which are designed for converting the control signal input signal into a digital and/or pulsed modulation input signal (10) and which are upstream from isolating transmission means (9) that transmit the digital and/or pulsed modulation input signal (10) to a digital and/or pulsed modulation output signal (11) isolated from the control signal input, said modulation output signal (11) being converted by demodulation means (12) downstream from the transmission means (9) into the control signal output signal tappable at the control signal output, wherein
operating voltage power supply means (8) are connected downstream from the control signal input and form a power supply voltage for electronic system(s) provided for the transmission means (9) at the input end from a predetermined dc voltage component of the applied control signal input signal.

2. The device according to claim 1,
**characterized in that**
the control signal input (6) is designed so that the variable rotational speed control voltage can be applied to this signal input with a minimum voltage, including a predetermined voltage interval from the 0V level, wherein a range of the rotational speed control voltage between preferably 3.3V and 20V, especially preferably between 5V and 15V, most especially preferably between 5V and 10V, can be applied.

3. The device according to any one of the preceding claims,
**characterized in that**
the control signal output (13) is designed with two poles for connection to the fan motor (3).

4. The device according to any one of the preceding claims,
**characterized in that**
the fan motor (3) is designed as a dc motor, preferably single-phase or three-phase, especially brushless.

5. The device according to any one of the preceding claims,
**characterized in that**
the modulation means (7) are implemented without programmed or programmable logic means and are designed with a control amplifier and/or an operational amplifier (20) wired for digitization of the rotational speed control voltage.

6. The device according to claim 5,
**characterized in that**
the modulation means (7) have a Schmitt trigger (21), which is designed on the basis of an operational amplifier (20) and compares a periodic, and in particular sawtooth, internal auxiliary signal with the analog control signal input signal, wherein the internal auxiliary signal is preferably generated by means of another operational amplifier (20).

7. The device according to any one of the preceding claims,
**characterized in that**
the isolating transmission means (9) have an optocoupler and/or an inductive isolator, in particular implemented by a preferably standardized integrated circuit and/or a capacitive isolator.

8. The device according to any one of the preceding claims,
**characterized in that**
the demodulation means (12) have an analog low-pass circuit, preferably constructed from discrete components, in particular by connecting a resistor to a capacitor.

9. The device according to any one of the preceding claims,
**characterized in that**
the transmission means (9) are implemented in two channels so that a second channel is arranged for isolated feedback of a fan motor-specific signal of the connected fan motor (3), in particular utilizing a second optocoupler of a joint optocoupler housing of the transmission means (9), preferably for tapping at an additional signal connection on the input end.

10. A fan system, comprising a fan motor control device (1) according to any one of the preceding claims, as well as a fan motor electronic system (2) controlled by the control signal output and driving the stator windings of a fan motor.

11. The fan system according to claim 10,
**characterized in that**
the fan motor control device (1) and the fan motor electronic system (2) are arranged on a circuit board and/or are arranged in a shared fan housing.

12. The fan system according to claim 10 or 11,
**characterized in that**
a side dimension of the fan housing is in the range between 110 mm and 130 mm, in particular between 115 mm and 125 mm, and/or the maximum power consumption by the fan motor electronic system (2) is 15W, more preferably 10W, and even more preferably 5W.

13. A method for operating a fan motor control device (1) according to claims 1 through 8, comprising the following steps:
- Applying a variable rotational speed control voltage having a dc voltage component at the control signal input,
- Generating a pulsed and/or digital modulation input signal (10) from the rotational speed control voltage at the input end by means of modulation means (7) provided,
- Transmitting the modulation input signal (10) by means of isolating transmission means (9) into a digital and/or pulsed modulation output signal (11) isolated from the control signal input,
- Converting the digital and/or pulsed modulation output signal (11) by the demodulation means (12) provided into a control signal output signal that can be tapped at the control signal output for the fan motor (3).

14. The method according to claim 13,
**characterized in that**
the control signal output signal is applied to a fan motor electronic system (2), which energizes the stator windings of the fan motor (3), preferably designed as a single-phase or three-phase dc motor, in particular brushless.

## Revendications

1. Dispositif de commande de moteur de ventilateur (1), comprenant une entrée de signal de commande (6) pour appliquer une tension de commande de vitesse de rotation en tant que signal d'entrée de signal de commande, et une sortie de signal de commande (13) pour prélever un signal de sortie de signal de commande en vue du raccordement à un moteur de ventilateur (3),
**caractérisé en ce que** des moyens de modulation (7) sont placés en aval de l'entrée de signal de commande (6) qui sont réalisés pour convertir le signal d'entrée de signal de commande en un signal d'entrée de modulation (10) numérique et/ou pulsé, et en aval desquels sont placés des moyens de transmission (9) avec séparation de potentiel qui transmettent le signal d'entrée de modulation (10) numérique ou pulsé dans un signal de sortie de modulation (11) numérique et/ou pulsé, découplé du potentiel par rapport à l'entrée de signal de commande et qui est converti par des moyens de démodulation (12), placés en aval des moyens de transmission (9), en signal de sortie de signal de commande pouvant être prélevé à la sortie de signal de commande, dans lequel
des moyens d'alimentation en tension de service (8) sont placés en aval de l'entrée de signal de commande qui forment à partir d'une composante de tension continue prédéterminée du signal d'entrée de signal de commande une tension d'alimentation pour une électronique prévue du côté entrée des moyens de transmission (9).

2. Dispositif selon la revendication 1, **caractérisé en ce que** l'entrée de signal de commande (6) est réalisée de telle sorte que la tension de commande de vitesse de rotation variable peut y être appliquée avec un minimum de tension qui respecte une distance de tension prédéterminée par rapport au niveau de 0 V, dans lequel une plage de la tension de commande de vitesse de rotation entre de préférence 3,3 V et 20 V, de manière particulièrement préférée entre 5 V et 15 V, de manière tout particulièrement préférée entre 5 V et 10 V peut être appliquée.

3. Dispositif selon l'une quelconque des revendications précédentes, **caractérisé en ce que** la sortie de signal de commande (13) est réalisée de manière bipolaire pour le raccordement au moteur de ventilateur (3).

4. Dispositif selon l'une quelconque des revendications précédentes, **caractérisé en ce que** le moteur de ventilateur (3) est réalisé comme un moteur à courant continu, de préférence monophasé ou triphasé, de préférence sans balais.

5. Dispositif selon l'une quelconque des revendications précédentes, **caractérisé en ce que** les moyens de modulation (7) sont réalisés sans moyens logiques programmables ou programmés et sont réalisés avec un amplificateur de réglage et/ou un amplificateur opérationnel (20) câblé(s) pour la numérisation de la tension de commande de vitesse de rotation.

6. Dispositif selon la revendication 5, **caractérisé en ce que** les moyens de modulation (7) présentent une bascule de Schmitt (21) réalisé sur la base d'un amplificateur opérationnel (20) et qui compare un signal auxiliaire interne périodique et en particulier en dents de scie avec le signal d'entrée de signal de commande analogique, le signal auxiliaire interne étant de préférence généré au moyen d'un autre amplificateur opérationnel (20).

7. Dispositif selon l'une quelconque des revendications précédentes, **caractérisé en ce que** les moyens de transmission (9) de séparation de potentiel présentent un optocoupleur et/ou un élément de découplage de potentiel inductif, mis en œuvre en particulier par un circuit intégré, en particulier standardisé, et/ou un élément de découplage capacitif.

8. Dispositif selon l'une quelconque des revendications précédentes, **caractérisé en ce que** les moyens de démodulation (12) présentent un circuit passe-bas analogique, de préférence réalisé à partir de composants discrets, en particulier par le câblage d'une résistance et d'un condensateur.

9. Dispositif selon l'une quelconque des revendications précédentes, **caractérisé en ce que** les moyens de transmission (9) sont réalisés avec deux canaux de telle sorte qu'un deuxième canal, en particulier en utilisant un deuxième optocoupleur d'un boîtier d'optocoupleur commun des moyens de transmission (9), est disposé pour le retour avec séparation du potentiel d'un signal spécifique du moteur de ventilateur du moteur de ventilateur (3) raccordé, de préférence pour le prélèvement au niveau d'une borne de signal supplémentaire côté entrée.

10. Système de ventilateur, présentant un dispositif de commande de moteur de ventilateur (1) selon l'une quelconque des revendications précédentes, ainsi qu'une électronique de moteur de ventilateur (2) pilotée par l'intermédiaire de la sortie de signal de commande qui entraîne les enroulements de stator d'un moteur de ventilateur.

11. Système de ventilateur selon la revendication 10 **caractérisé en ce que** le dispositif de commande de moteur de ventilateur (1) et l'électronique de moteur de ventilateur (2) sont disposés sur une platine et/ou sont disposés dans un boîtier de ventilateur commun.

12. Système de ventilateur selon la revendication 10 ou 11, **caractérisé en ce qu'**une dimension d'arête du boîtier de ventilateur est située dans la plage entre 110 mm et 130 mm, en particulier entre 115 mm et 125 mm, et/ou **en ce qu'**une puissance absorbée maximale de l'électronique de moteur de ventilateur (2) comprend 15 W, de plus grande préférence 10 W et de plus grande préférence encore 5 W.

13. Procédé d'exploitation du dispositif de commande de moteur de ventilateur (1) selon la revendication 1 à 8, comprenant les étapes suivantes consistant à :
- appliquer à l'entrée de signal de commande une tension de commande de vitesse de rotation variable présentant une composante de tension continue,
- générer un signal d'entrée de modulation (10) pulsé et/ou numérique par l'intermédiaire de moyens de modulation (7) prévus à partir de la tension de commande de vitesse de rotation,
- transmettre le signal d'entrée de modulation (10) dans un signal de sortie de modulation (11) numérique et/ou pulsé, découplé du potentiel par rapport à l'entrée de signal de commande, par des moyens de transmission de séparation de potentiel (9),
- convertir le signal de sortie de modulation (11) numérique ou pulsé par l'intermédiaire de moyens de démodulation (12) prévus en un signal de sortie de signal de commande pouvant être prélevé à la sortie de signal de commande pour le moteur de ventilateur (3).

14. Procédé selon la revendication 13, **caractérisé en ce que** le signal de sortie de signal de commande est appliqué à une électronique de moteur de ventilateur (2) qui excite les enroulements de stator du moteur de ventilateur (3), réalisé de préférence sous la forme d'un moteur à courant continu monophasé ou triphasé, en particulier sans balais.
